Europäisches Patentamt

European Patent Office

Office européen des brevets

(19)

(11) **EP 1 254 408 B1**

(12) **FASCICULE DE BREVET EUROPEEN**

(45) Date de publication et mention
de la délivrance du brevet:
**15.10.2003 Bulletin 2003/42**

(21) Numéro de dépôt: **01907631.4**

(22) Date de dépôt: **18.01.2001**

(51) Int Cl.$^7$: **G06F 7/72**

(86) Numéro de dépôt international:
**PCT/FR01/00166**

(87) Numéro de publication internationale:
**WO 01/055838 (02.08.2001 Gazette 2001/31)**

(54) **PROCEDE DE CALCUL D'EXPONENTATION MODULAIRE DANS UN COMPOSANT ELECTRONIQUE METTANT EN OEUVRE UN ALGORITHME DE CHIFFREMENT A CLE PUBLIQUE**

VERFAHREN ZUR MODULAREN POTENZIERUNG IN EINEM ELEKRONISCHEN BAUSTEIN, DER EINEN KRYPTOGRAPHISCHEN ALGORITHMUS MIT ÖFFENTLICHEM SCHLÜSSEL DURCHFÜHRT

MODULAR EXPONENTIAL ALGORITHM IN AN ELECTRONIC COMPONENT USING A PUBLIC KEY ENCRYPTION ALGORITHM

(84) Etats contractants désignés:
**DE ES FR GB IT**

(30) Priorité: **26.01.2000 FR 0001333**

(43) Date de publication de la demande:
**06.11.2002 Bulletin 2002/45**

(73) Titulaire: **GEMPLUS**
**13420 Gemenos Cedex (FR)**

(72) Inventeur: **BENOIT, Olivier**
**Quebec, Québec H3E 1 G1 (CA)**

(56) Documents cités:
- **KOCHER P ET AL: "DIFFERENTIAL POWER ANALYSIS" LECTURE NOTES IN COMPUTER SCIENCE;VOL. 1666,DE,BERLIN: SPRINGER, 1999, pages 388-397, XP000863414 ISBN: 3-540-66347-9**
- **MESSERGES T S ET AL: "Power analysis attacks of modular exponentiation in smartcards" CRYPTOGRAPHIC HARDWARE AND EMBEDDED SYSTEMS. FIRST INTERNATIONAL WORKSHOP, CHES'99, WORCESTER, MA, USA, 12-13 AUG 1999, PROCEEDINGS (LECTURE NOTES IN COMPUTER SCIENCE VOLUME 1717), pages 144-157, XP000952221 1999, Berlin, Germany, Springer-Verlag, Germany ISBN: 3-540-66646-X**

## Description

La présente invention concerne un procédé de calcul d'exponentiation modulaire anti SPA, de l'anglais " Simple Power Attack " dans un composant électronique mettant en oeuvre un algorithme de chiffrement à clé publique.

De telles attaques sont décrites dans les publications de Kocher P. et al intitulé "Differential Power Analysis" Lecture Notes in Computer Science; Vol. 1666, DE, Berlin, Springer, 1999, pages 388-397, XP000863414 ISBN: 3-540-66347-9 et de Messerges T. S. et al intitulé "Power Analysis Attacks of Modular Exponentiation in Smartcards" Cryptographic Hardware and Embedded Systems. First International Workshop, CHES'99, Worcester, MA, USA, 12-13 Août 1999, Proceedings (Lecture Notes in Computer Science Volume 1717), pages 144-157, XP000952221 1999, Berlin, Germany, Springer-Verlag, Germany ISBN: 3-540-66646-X.

Les caractéristiques des algorithmes de cryptographie à clé publique sont connus : calculs effectués , paramètres utilisés. La seule inconnue est la clé privée contenue en mémoire programme. Toute la sécurité de ces algorithmes de cryptographie tient dans cette clé privée contenue dans la carte et inconnue du monde extérieur de cette carte. Cette clé privée ne peut être déduite de la seule connaissance du message appliqué en entrée et du message chiffré fourni en retour ou de la connaissance de la clé publique.

Or il est apparu que des attaques externes, basées sur les consommations de courant ou une analyse de consommation en courant lorsque le microprocesseur d'une carte est en train de dérouler l'algorithme de cryptographie pour signer un message, déchiffrer un message, permettant à des tiers mal intentionnés de trouver la clé privée contenue dans cette carte.

Ces attaques sont appelées attaques SPA, acronyme anglo-saxon pour Single Power Analysis.

Le principe de ces attaques SPA repose sur le fait que la consommation de courant du microprocesseur exécutant des instructions varie selon la donnée manipulée.

Notamment, quand une instruction exécutée par le microprocesseur nécessite une manipulation d'une donnée bit par bit, on a deux profils de courant différents selon que ce bit vaut " 1 " ou " 0 ". Typiquement, si le microprocesseur manipule un " 0 ", on a à cet instant d'exécution une première amplitude du courant consommé et si le microprocesseur manipule un " 1 ", on a une deuxième amplitude du courant consommé, différente de la première.

Ainsi l'attaque SPA exploite la différence du profil de consommation en courant dans la carte pendant l'exécution d'une instruction suivant la valeur du bit manipulé. D'une manière simplifiée, la conduite d'une attaque SPA consiste à identifier une ou des périodes particulières du déroulement de l'algorithme comprenant l'exécution d'au moins une instruction manipulant des données bit par bit et à distinguer deux profils de consommation de courant différents, l'un correspondant à la manipulation d'un bit égal à " 0 " et l'autre correspondant à un bit égal à " 1 ". L'analyse s'effectue sur une courbe ou éventuellement sur n courbes du même déroulement de l'algorithme moyenné pour supprimer le bruit.

L'exponentiation modulaire est défini par la formule mathématique suivante :

$$R = X^Y \bmod N,$$

dans laquelle :

    Y est un exposant qui a une taille de k bits ;
    N est un modulus qui a une taille de k' bits.
    X est une variable connue qui a une taille de k" bits ;
    R est le résultat de l'opération d'exponentiation modulaire et a une taille de k' bits.

On peut utiliser les algorithmes classiques A ou B connus et décrits ci-dessous.

L'algorithme classique A utilisé pour le calcul de la formule mathématique ci dessus mentionnée est le suivant :

-    On initialise R à 1 : R=1 ;
-    On parcours la représentation binaire de Y du bit de poids fort noté Y(k-1) vers le bit de poids faible Y(0); pour chaque bit Y(i), i variant de (k-1) à 0, on effectue l'opération supplémentaire : $R=R^2$.
    Si le bit Y(i) est égal à 1, une étape supplémentaire est exécutée qui consiste en l'opération :

$$R = R*X.$$

Si par exemple Y est égal à 5, sa représentation binaire est : 101 ;
Si on applique l'algorithme ci-dessus :

-    pour le premier bit [Y(2)=1], on effectue $R=R^2$ suivi de l'opération : R*X=X, soit le résultat R=X ;
-    pour le second bit [Y(1)=0], on effectue l'opération $R=R^2$ soit le résultat $R=X^2$ ;
-    pour le troisième bit [Y(0)=1], on effectue l'opération $R=(R^2)^2$ suivi de l'opération R=R*X soit le résultat : $R=(X^2)^2=X^5$.
    Pour rappel, on reprend toujours le R précédent.

Bien sûr, toutes les opérations mathématiques décrites pour l'exemple Y est égal à 5 sont effectuées modulo N ce qui permet de travailler avec un registre r d'une taille de k' bits.

L'algorithme classique B utilisé pour le calcul de la formule mathématique ci-dessus mentionnée est le suivant :

- on initialise R à 1 et Z à X :
  R=1 et Z=X, Z étant une variable :
- on parcours la représentation binaire de Y du bit de poids faible Y(0) vers le bit de poids fort Y(k-1) ;
  pour chaque bit Y(i), i variant de 0 à (k-1), on effectue l'opération supplémentaire : $Z=Z^2$, quelque soit i supérieur à 0 ;
  si le bit Y(i) est égal à 1, une étape supplémentaire est exécutée qui consiste en l'opération : R=R*Z.

Si par exemple Y est égal à 5, sa représentation binaire est 101.

Si on applique l'algorithme ci-dessus :

- pour le premier bit, on a Y(0)=1 ; on n'effectue pas l'opération $Z^2$ (car i=0) et on effectue l'opération : R=R*Z=X.
- pour le second bit, on a [Y(1)]=0, on effectue l'opération $Z^2=X^2$ ; R est inchangé car Y(1)=0 ;
- pour le troisième bit [Y(2)=1], on effectue l'opération : $Z=Z^2=X^4$ et comme Y(2) est égal à 1, on fait aussi l'opération R=R*Z et on obtient donc $X^5$.

Pour rappel, on reprend toujours le R et le Z précédent.
Bien sûr, toutes les opérations mathématiques décrites pour l'exemple Y est égal à 5 sont effectuées modulo N ce qui permet de travailler avec des registres r et z d'une taille de k' bits.
Cependant, cet algorithme B est rarement utilisé dans un composant électronique de type carte à puce car il nécessite plus de mémoire (registre supplémentaire z d'une taille de k' bits).

On constate que, sur les algorithmes classiques A et B expliqués ci-dessus, en fonction de chaque bit de Y on effectue une opération si le bit est égal à 0 et deux opérations si le bit est égal à 1. Ces algorithmes A et B sont utilisés pour le RSA. Pour rappel, le système de chiffrement RSA est le système de chiffrement à clé public le plus utilisé. Il peut être utilisé comme procédé de chiffrement ou comme procédé de signature. Le système de chiffrement RSA est utilisé dans les cartes à puce pour certaines applications de celles-ci. Les applications possibles de RSA sur une carte à puce sont l'accès à des banques de données, des applications bancaires, des applications de paiements à distance, comme par exemple la télévision à péage, la distribution d'essence ou le paiement de péages d'autoroute. Cette liste d'applications est bien sûr non exhaustive.

Le principe du système de chiffrement RSA est le suivant. Il peut être divisé en trois parties distinctes qui sont :

1) La génération de la paire de clés RSA ;
2) Le chiffrement d'un message clair en un message chiffré, et
3) Le déchiffrement d'un message chiffré en un message clair.

Une opération RSA de chiffrement consiste en ce qu'on calcule un chiffré c qui est égal à un message $M^e$ mod N représenté par l'opération :C= $M^e$ mod N, dans laquelle e est l'exposant publique de chiffrement et N est le modulus.
Une opération RSA de déchiffrement consiste en ce qu'on calcule un message M' qui est égal à M si on déchiffre de manière juste et est représenté par l'opération:

$$M' = C^d \bmod N,$$

dans laquelle d est l'exposant privé de déchiffrement et N le modulus.
On constate que le RSA est directement une opération d'exponentiation modulaire.
Il s'avère que d est un élément secret puisque privé ; on constate donc que d est équivalent à Y de l'algorithme classique A ou B, algorithmes décrits au début de la description. Cependant, ces algorithmes utilisés pour le RSA peuvent être attaqués par simple étude de la consommation de courant du composant électronique mettant en oeuvre l'invention.

En effet, si on considère que la signature S d'une opération $R^2$ pour l'algorithme A et $Z^2$ pour l'algorithme B appelée " operation square ", notée S(SQU), est différente de la signature S de l'opération R*X pour l'algorithme A et Z*R pour l'algorithme B, appelée " operation multiply ", notée S(MUL), alors la consommation de courant, lors de l'exécution de l'algorithme A ou B décrits précédemment, consiste en une succession de signatures S(SQU) et S(MUL) directement dépendante de Y.

Par exemple, dans le cas de l'algorithme A, pour Y égal à 5, on aura la succession suivante de signatures :
[S(SQU), S(MUL)], [S(SQU)], [S(SQU), S(MUL)], dans laquelle succession les signatures [S(SQU)] suivie de [S(MUL)] correspond à un bit égal à 1 et la signature [S(SQU)] suivi de la signature [S(SQU)] correspond à un bit égal à 0.

Simplement en regardant la consommation de courant si on sait différencier S(SQU) de S(MUL), on peut retrouver l'intégralité de la valeur Y. Si on applique cette attaque au RSA décrit ci-dessus, on retrouve Y=d qui est l'exposant privé de déchiffrement qui doit rester secret par définition ce qui est donc très gênant.

La présente invention permet de supprimer cet inconvénient majeur.
Cependant, pour bien insister sur l'inventivité de la présente invention, il est utile de décrire un exemple d'amélioration des algorithmes A et B pourtant défaillants.
Dans l'algorithme classique A ou B, on considère que le composant qui met en oeuvre l'invention dispose d'une opération optimisée appelée " Square ", notée SQU qui calcule $R^2$ de manière plus efficace que l'opération " Multiply ", notée MUL.

La première parade contre l'attaque consiste à utiliser uniquement l'opération MUL. Dans ce cas, il ne subsiste plus que la signature de l'opération " Multiply " ce qui ne permet plus de distinguer une quelconque information permettant de remonter à la valeur Y. Plus précisément, l'opération mathématique " Multiply " a deux opérandes V et W et est définie par la formule :

$$MUL(V,W) = V*W.$$

En théorie, on se protège mais dans la pratique on utilise l'opération MUL(V,V) ou l'opération MUL(V,W) ; il y a donc encore une différence dans la consommation de courant puisque les opérandes sont différents. Il ne s'agit pas d'une solution fiable.

La présente invention consiste en un procédé de calcul de l'exponentiation modulaire tel que défini dans les revendications indépendantes 1 et 2 qui permet d'éviter l'inconvénient cité juste ci-dessus.

On utilise deux registres $R_1$ et $R_2$ et un indicateur I qui est égal à zéro, " 0 ", signifiant que le résultat se trouve dans le registre $R_1$ ou qui est égal à un, " 1 ", signifiant que le résultat se trouve dans le registre $R_2$ ; ceci permet d'indiquer dans quel registre se trouve le bon résultat.

L'algorithme de l'invention qui reprend l'algorithme A consiste à s'exécuter par les étapes d'initialisation suivantes a et b et les étapes de calcul c, d , e et f qui sont effectuées k fois, k étant la taille de Y, étapes décrites ci-dessous:

 a) On initialise $R_1$=1 ;
 b) On initialise I=0 ;

Pour chaque bit Y(i) de la représentation binaire de Y, on effectue les quatre étapes c, d, e et f suivantes de " 0 " à " k-1 " ; on parcours la représentation binaire de Y du bit de poids fort Y(k-1) vers le bit de poids faible Y(0);

 c) Si I=0, on effectue l'opération $R_2$= $(R_1)^2$ ; Si I=1, on effectue l'opération $R_1$= $(R_2)^2$ ;
 d) On complémente I, c'est à dire il change de valeur mais uniquement de " 0 " vers " 1 " ou de " 1 " vers " 0 " ;
 e) On refait l'opération de test sur I :
 si I=0, on effectue l'opération $R_2$= $R_1$*X ;
 si I=1, on effectue l'opération $R_1$= $R_2$*X ;
 f) Si Y(i) est égal à 1, alors on complémente I ;
 si Y(i) est égal à 0, alors on garde I inchangé.

Ainsi, quelque soit la valeur de Y, on exécute toujours une opération de SQU et une opération de MUL. On aura donc à l'étape d l'une des deux signatures suivantes :

$$S(R_2=SQU(R_1)) \text{ ou } S(R_1=SQU(R_2)).$$

On aura aussi à l'étape f une des deux signatures suivantes : $S(R_1=MUL(R_2,X))$ ou $S(R_2=MUL(R_1, X))$.

Les signatures de l'étape c sont équivalentes car elles utilisent les mêmes opérandes et effectuent la même opération (SQU).

Les signatures de l'étape e sont équivalentes car elles utilisent les mêmes opérandes et effectuent la même opération (MUL).

Par conséquent, il n'est plus possible de remonter à la valeur de Y qui sera une succession d'opérations (SQU) et (MUL).

L'application de la présente invention permet de calculer une exponentiation modulaire de manière sécurisée dans un composant électronique mettant en oeuvre un algorithme à clé publique nécessitant un algorithme d'exponentiation modulaire.

L'algorithme de la présente invention qui reprend l'algorithme classique B consiste à s'exécuter par les étapes d'initialisation suivantes a et b et les étapes de calcul suivantes c, d et e qui sont effectuées k fois, k étant la taille de Y:

 a) on initialise $R_1$=1 et Z=X ;
 b) on initialise I=0 ;

Pour chaque bit de Y(i) de la représentation binaire de Y, on effectue les trois étapes c, d et e , i variant de " 0 " à " k-1 " ; on parcours la représentation binaire de Y du bit de poids faible Y(0) vers le bit de poids fort Y(k-1) ;

 c) on effectue l'opération : Z:=$Z^2$ ;
 d) si I=0, on effectue l'opération : $R_2$:=$R_1$*Z ;
 si I=1, on effectue l'opération : $R_1$:=$R_2$*Z ;
 e) si Y(i)=0, alors on garde I inchangé et si Y(i)=1, alors on complémente I.

Ainsi, quelque soit la valeur de Y, on exécute toujours une opération de SQU et une opération MUL. On aura donc à l'étape c la signature suivante : S(SQU).

On aura à l'étape d une des deux signatures suivantes : $S(R_1=MUL(R_2,Z))$ ou $S(R_2=MUL(R_1,Z))$. Les signatures de l'étape d sont équivalentes car elles utilisent les mêmes opérandes et effectuent la même opération (MUL).

Par conséquent, il n'est plus possible de remonter à la valeur Y qui sera une succession d'opérations (SQU) et (MUL). L'application de la présente invention permet de calculer une exponentiation modulaire de manière sécurisée dans un composant électronique mettant en oeuvre un algorithme à clé publique nécessitant un algorithme d'exponentiation modulaire.

Comme exemple de l'invention, on utilise le DSA qui est une variante de l'algorithme de signatures de Schnorr et ElGamal.

Pour signer les étapes m, les étapes suivantes sont réalisées :

> 1) Génération d'un nombre aléatoire K ;
> 2) Calcul de r=(g$^k$modp)modq
> avec g, p et q des nombres entiers publics connus par le monde extérieur de la carte à puce ;
> 3) Calcul de s=(K$^{-1}$(H(m)+x*r))modq
> avec H() fonction de hachage et x une clé privée .

Le couple (r,s) correspond à la signature du message m.

On remarque que K est secret.

L'étape 2 consiste en partie à une exponentiation modulaire :

$$r'=g^k \bmod p \text{ et } r=r' \bmod q.$$

Si l'exponentiation modulaire est effectuée avec l'algorithme classique A ou B comme décrit précédemment, alors une attaque SPA permet de remonter à la valeur k. Connaissant k et comme s, m et r sont connus, l'attaquant peut calculer la clé secrète x. Ainsi, il a trouvé la clé de la signature et le système est cassé. Il est donc préférable d'utiliser la présente invention ou sa variante de réalisation pour effectuer l'exponentiation modulaire de l'étape 2 du présent exemple.

Ainsi, dans la présente invention, la méthode de calcul de l'algorithme ne permettant pas de retrouver k par étude de la consommation de courant , l'attaquant ne peut pas remonter à la valeur de la clé privée x.

## Revendications

1. Procédé de calcul d'exponentiation modulaire implémenté dans un appareil électronique de cryptographie à clé publique défini par la formule mathématique suivante :

$$R= X^Y \bmod N,$$

Y étant un exposant présentant une taille de k bits , N étant un modulus présentant une taille de k' bits, X étant une variable connue présentant une taille de k'' bits ;
R étant le résultat de l'opération d'exponentiation modulaire et présentant une taille de k' bits
et
comprenant des registres R1 et R2 et un indicateur I indiquant si le résultat se trouve dans le registre R1 ou R2, ledit procédé étant **caractérisé en ce qu'**

il présente les étapes d'exécution suivantes comprenant les étapes a et b, dites étapes d'initialisation, et les étapes c, d et e, dites étapes de calcul :

> a) on initialise R$_1$=1 et Z=X ;
> b) on initialise I=0 ;
> pour chaque bit de Y(i) de la représentation binaire de Y, on effectue les trois étapes c, d et e, i variant de " 0 " à " k-1 " ; on parcours donc la représentation binaire de Y du bit de poids faible Y(0) vers le bit de poids fort Y(k-1) ;
> c) on effectue l'opération : Z:=Z$^2$ ;
> d) si I=0, on effectue l'opération : R$_2$:=R$_1$*Z ;
> si I=1, on effectue l'opération : R$_1$:=R$_2$*Z ;
> e) si Y(i)=0, alors on garde I inchangé et si Y(i) =1, alors on complémente I.

2. Procédé de calcul d'exponentiation modulaire implémenté dans un appareil électronique de cryptographie à clé publique défini par la formule mathématique suivante :

$$R= X^Y \bmod N,$$

Y étant un exposant présentant une taille de k bits ;
N étant un modulus présentant une taille de k' bits.
X étant une variable connue présentant une taille de k'' bits ;
R étant le résultat de l'opération d'exponentiation modulaire présentant une taille de k' bits
Et
comprenant des registres R1 et R2 et un indicateur I indiquant si le résultat se trouve dans le registre R1 ou R2, ledit procédé étant **caractérisé en ce qu'**il présente les étapes d'exécution suivantes comprenant les étapes a et b, dites étapes d'initialisation, et les étapes c, d, e et f, dites étapes de calcul :

> a) On initialise R$_1$=1 ;
> b) On initialise I=0 ;
> Pour chaque bit Y(i) de la représentation binaire de Y, on effectue les quatre étapes c, d, e et f suivantes, i variant de " 0 " à " k-1 " , on parcours la représentation binaire de Y du bit de poids fort Y(k-1) vers le bit de poids faible Y(0) ;
> c) Si I=0, on effectue l'opération R$_2$= (R$_1$)$^2$ ;
> Si I=1, on effectue l'opération R$_1$= (R$_2$)$^2$ ;
> d) Dans les deux cas de l'étape c, on complémente I, c'est à dire il change de valeur mais uniquement de " 0 " vers " 1 " ou de " 1 " vers " 0 " ;
> e) On refait l'opération de test sur I :
> si I=0, on effectue l'opération R$_2$= R$_1$*X ;
> si I=1, on effectue l'opération R$_1$= R$_2$*X ;
> f) Si Y(i) est égal à 1, alors on complémente I ;
> si Y(i) est égal à 0, alors on garde I inchangé.

**3.** Composant électronique **caractérisée en ce qu'**il met en oeuvre l'une quelconque des revendications 1 à 2.

**4.** Composant électronique selon la revendication 3 **caractérisé en ce qu'**il est un objet portable électronique du type carte à puce.

**5.** Terminal électronique caractérisé en ce s'il met en oeuvre l'une quelconque des revendications 1 à 2.


**Patentansprüche**

**1.** Verfahren zur Berechnung des modularen Potenzierens, implementiert in einem elektronischen Kryptographiegerät mit öffentlichem Schlüssel, definiert durch die nachstehende mathematische Formel:

$$R = X^Y \bmod N,$$

wobei Y ein Exponent mit einer Größe von k Bit ist, N ein modulo mit einer Größe von k' Bit, X eine bekannte Variable mit einer Größe von k" Bit; R das Ergebnis der modularen Potenzierungsoperation mit einer Größe von k' Bit und

mit Registern R1 und R2 und einem Indikator I, der angibt, ob sich das Ergebnis im Register R1 oder R2 befindet, wobei dieses Verfahren **dadurch gekennzeichnet ist, dass** es die nachfolgenden Ausführungsstufen enthält, die Stufen a und b als sogenannte Initialisierungsstufen, die Stufen c, d und e als Berechnungsstufen:

    a) man initialisiert $R_1$=1 et Z=X;
    b) man initialisiert I=0;
    für jedes Bit Y(i) der binären Darstellung von Y führt man die drei Stufen c, d und e aus, wobei i von "0" bis "k-1" variiert, man durchläuft also die binäre Darstellung Y des Bits mit dem schwächsten Gewicht Y (0) zum Bit mit dem stärksten Gewicht Y (k-1);
    c) man führt die Operation aus: $Z:=Z^2$;
    d) wenn I=0 führt man die Operation aus: $R_2:=R_1*Z$;
    wenn I=1 führt man die Operation aus: $R_1:=R_2*Z$;
    e) bei Y(i)=0, bleibt I unverändert, und bei Y(i)=1, ergänzt man I.

**2.** Verfahren zur Berechnung des modularen Potenzierens, implementiert in einem elektronischen Kryptographiegerät mit öffentlichem Schlüssel, definiert durch die nachstehende mathematische Formel:

$$R = X^Y \bmod N,$$

wobei Y ein Exponent mit einer Größe von k Bit ist, N ein modulo mit einer Größe von k' Bit, X eine bekannte Variable mit einer Größe von k" Bit; R das Ergebnis der modularen Potenzierungsoperation mit einer Größe von k' Bit und

mit Registern R1 und R2 und einem Indikator I, der angibt, ob sich das Ergebnis im Register R1 oder R2 befindet, wobei dieses Verfahren **dadurch gekennzeichnet ist, dass** es die folgenden Ausführungsstufen enthält, die Stufen a und b als sogenannte Initialisierungsstufen, die Stufen c, d, e und f als Berechnungsstufen:

    a) man initialisiert $R_1$=1;
    b) man itialisiert I=0;
    für jedes Bit Y(i) der binären Darstellung von Y führt man die vier Stufen c, d, e und f aus, wobei i von "0" bis "k-1" variiert, man durchläuft also die binäre Darstellung von Y des Bits mit dem stärksten Gewicht Y (k1) zum Bit mit dem schwächsten Gewicht Y(0);
    c) wenn I=0 führt man die Operation $R_2 = (R_1)^2$ aus;
    wenn I=1 führt man die Operation $R_1 = (R_2)^2$ aus;
    d) In den beiden Fällen der Stufe c ergänzt man I, das heißt, es ändert seinen Wert, aber nur von "0" nach "1" oder von "1" nach "0".
    e) Man wiederholt die Testoperation bei I:
    wenn I=0 führt man die Operation $R_2 = R_1*X$ aus;
    wenn I=1 führt man die Operation $R_1 = R_2*X$ aus;
    f) wenn Y(i) gleich 1, ergänzt man I;
    wenn Y(i) gleich 0, lässt man I unverändert.

**3.** Elektronisches Bauteil, **dadurch gekennzeichnet, dass** es irgendeinen der Ansprüche 1 bis 2 realisiert.

**4.** Elektronisches Bauteil nach Anspruch 3, **dadurch gekennzeichnet, dass** es ein trag barer elektronischer Gegenstand von der Art einer Chipkarte ist.

**5.** Endgerät, **dadurch gekennzeichnet, dass** es irgendeinen der Ansprüche 1 bis 2 realisiert.


**Claims**

**1.** Method of calculation of modular exponentiation implemented in a **public-key** electronic cryptography apparatus defined by the following mathematical formula.

$$R = X^y \bmod N,$$

where Y is an exponent with a size of k bits,
N a modulus with a size of k' bits,
X a known variable with a size of k" bits;
R the result of the modular exponentiation operation
and having a size of k' bits
and
comprising registers R1 and R2 and an indicator I indicating if the result is located in register R1 or R2, said method being **characterized in that** it presents the following execution steps comprising steps a and b, called initialization steps and steps c, d and e, called calculation steps:

a) $R_1 = 1$ and $Z = X$ are initialized;
b) I = O is initialized;
for each bit of Y(i) of the binary representation of Y, the three steps c, d and e, are carried out, with i ranging from "0" to "k-1"; hence the binary representation of Y is scanned from the low-order bit Y(0) to the high-order bit y(k-1);
c) the operation $Z := Z^2$ is carried out;
d) if I = 0, the operation $R_2 := R_1 * Z$ is carried out;
if I = 1, the operation $R_1 := R_2 * Z$ is carried out;
e) if Y (i) = 0, I is kept unchanged and if Y (i) = 1, I is complemented.

2. Method of calculation of modular exponentiation implemented in a **public-key** electronic cryptography apparatus defined by the following mathematical formula.

$$R = X^y \bmod N,$$

where Y is an exponent with a size of k bits,
N a modulus with a size of k' bits,
X a known variable with a size of k" bits;
R the result of the modular exponentiation operation
and having a size of k' bits
and
comprising registers R1 and R2 and an indicator I indicating if the result is located in register R1 or R2, said method being **characterized in that** it presents the following execution steps comprising steps a and b, called initialization steps and steps c, d and e, called calculation steps:

a) $R_1 = 1$ is initialized;
b) I = 0 is initialized;
For each bit Y (i) of the binary representation of Y, the following four steps c, d, e and f are carried out with i ranging from "0" to "k - 1", the binary representation of Y is scanned from the low-order bit Y (k - 1) to the high-order bit Y (0);

c) If I = 0, the operation $R_2 = (R_1)^2$ is carried out;
If I = 1, the operation $R_1 = (R_2)^2$;
d) In both cases of step c, I is complemented, that is it changes value but only from "0" to "1" or from "1" to "0";
e) The test operation is repeated on I:
if I = 0, the operation $R_2 = R_1 * X$ is carried out;
if I = 1, the operation $R_1 = R_2 * X$;
f) If Y (i) is equal to 1, I is complemented;
If Y (i) is equal to 0, I is kept unchanged.

3. Electronic component **characterized in that** it puts into practice any one of claims 1 and 2.

4. Electronic component according to claim 3 **characterized in that** it is a portable electronic object of the chip card type.

5. Electronic terminal **characterized in that** it puts into practice any one of claims 1 and 2.